# EUROPEAN PATENT APPLICATION

(11) **EP 3 319 022 A1**
(43) Date of publication of application: **09.05.2018**
(21) Application number: 16196829.2
(22) Date of filing: 02.11.2016
(51) Int. Cl.: G06Q 10/06, G06Q 10/10

(54) **COMPUTER-IMPLEMENTED METHOD, DATA-PROCESSING APPARATUS, COMPUTER PROGRAM, AND COMPUTER-READABLE MEDIUM**

(71) Applicant: Concore GmbH, 71069 Sindelfingen (DE)
(72) Inventor: Bauerheim, Michael, 71069 Sindelfingen (DE)
(74) Representative: Meyer zu Bexten, Elmar

(57) **Abstract**

Problem

The problem to be solved is to seek an alternative to known methods of motivating employees which provides the same or similar effects or is more cost-effective.

Solution

The problem is solved by, upon submission of a points claim form containing a user identifier and a number of points claimed, creating a record in a points claims table, the record comprising a unique points claim identifier, the submitted user identifier, and the submitted number of points claimed and, upon submission of a confirmation form containing the points claim identifier, selecting from the points claims table the record comprising the points claim identifier and marking the record as confirmed.

## Description

### Technical Field

The invention pertains to the field of employee motivation.

### Background Art

In contemporary management, employee motivation is broadly defined as the entirety of "psychological forces that determine the direction of a person's behavior in an organization, a person's level of effort and a person's level of persistence". This concept is analyzed in MEYER, John P., et al. Employee commitment and motivation: a conceptual analysis and integrative model. Journal of Applied Psychology. 2004, vol.89, no.6, p.991-1007. Pertinent methods are reviewed in JONES, Gareth R., et al. Contemporary Management. 3rd edition. Edited by WINSTON, Andy, et al. New York: McGraw-Hill, 2002. ISBN 0071151214. p.402-439.

Among the formal schemes used in employee motivation to promote or encourage specific actions are so-called incentive programs. More specifically, a type of program where participants collect and redeem points for rewards is known as a points-based incentive program. Depending on the program type and the organizational objectives, points may be awarded on many criteria including positive employee behavior, the demonstration of organizational values, the sale of new products, increased overall sales, or even the use of proper safety precautions. In addition to point awarding, the levels at which points can be redeemed may be customized by the organization. Points programs are a way for employers to motivate behavior over time while improving the organizations' overall performance.

As an example, a system for creating incentive plans to motivate and reward employees as per US 2002035506 A (LOYA RAMI) 21.03.2002 includes a series of computer programs or tools which customize, develop, and implement an incentive plan for a variety of businesses. A first tool is a computer program which features an Employee Survey program, which will allow users to customize an employee survey, automate the analysis of the survey, and generate graphic illustrations of the survey results. A second tool is a computer program(s) which performs and enables users to facilitate important functions integral to the design and implementation of an incentive plan, such as, setting-up an Incentive Program, entering Program Data, automating Periodic Benefit Calculations, and generating Employee Benefit Statements, Employee Periodic Reviews, and Periodic Management Reports. The program also provides sample documents of an actual corporate incentive program and of an individual incentive program that a user can modify as per specific needs of a corporation or an individual for virtual immediate implementation and use of a customized incentive plan.

### Summary of invention

The invention as claimed is disclosed below in such a way that the technical problem with which it deals can be appreciated and the solution can be understood.

### Technical Problem

The problem to be solved is to seek an alternative to the known method which provides the same or similar effects or is more cost-effective.

### Solution to Problem

The problem is solved by the characterizing portion of Claim 1. Further embodiments of the invention are set out hereinafter.

### Advantageous effect of invention

The invention serves to manage an entire workflow for incentivizing employees in an automated fashion through what may be called an employee motivation portal. An employer, by means of such system, sets a contest for a predetermined reward among her employees, the reward incentivizing the employees to a predetermined action, for instance, winning over a customer to or concluding a sale on behalf of the employer. Upon entering the contest, an employee incrementally earns points towards the reward by repeatedly taking the predetermined action, the points being credited to an account of the employee administered by the system. Eventually, the account having reached a predetermined balance, the participating employee may choose to redeem the points for the envisaged reward with the employer or any redemption partner thereof. The employee - whether in administration, sales, or production - is thus incited and motivated, which in turn increases the revenue generated by the organization.

To this end, a web server operated as per the invention presents the user with a variety of forms that brings together or aggregates all pertinent content on a single web page. In this scenario, the portal or application server performs most of the crucial functions of the application. In contrast to the state-of-the-art series of stand-alone computer programs or tools, an embodiment of the invention may in turn connect to back-end database servers or be part of a clustered server environment. High-capacity portal configurations for corporate enterprises may even include load balancing strategies.

Due to its client-server architecture, the proposed employee motivation portal leverages the ubiquity of web browsers, and the convenience of using a web browser to both administer and use the portal without distributing and installing software on potentially thousands of client computers. At the same time, a web application as per the invention may be implemented based on asynchronous Java Script and XML (Ajax) technologies while using dynamic HTML and CSS to mark up and style the information presented to employees and thus preserving a high level of cross-platform compatibility. In a preferred embodiment based on responsive web design (RWD), the layout of the portal adjusts dynamically to the characteristics of the device used (such as desktop PC, tablet, or mobile phone).

### Description of embodiments

A user may request points by clicking a button labeled "Claim points", referring to a specific contest. A form opens while the pertinent contest identifier and user identifier are loaded in the background. This way, it is ensured that the claimed points are ultimately assigned to the specific user.

On said form, the user may click on another button labeled "Claim points". Thereupon, the web server checks if any mandatory criteria have been entered on the web form and whether an invoice must be uploaded. The claimed points are then stored in a points claims table in an internal database. Only when a contest manager, using an administration area of his account, confirms the points claim, the claimed points are credited to the claimant's user account. The contest manager may also refuse the points application, giving a reason for refusal.

In a virtual rewards shop, available rewards may be requested by the user. Here, a distinction is made between internal and external rewards. Internal rewards are stored in a rewards table in the internal database and are retrieved from there on request. External rewards, on the other hand, are loaded via an interface to a service provider portal. From there, the data is sent to the pertinent supplier.

By clicking on a button labeled "Redeem reward", the web server checks in the background whether the user has enough money in his account to redeem the desired reward. Subsequently, the necessary reward data are loaded, including user identifier, name of the reward, and points required. In the case of an external reward being redeemed, the redemption data, i. e., employee data and reward data, are sent to a master database and an e-mail containing the company information is sent to the user.

The user's score is updated once the new data has been saved in the internal database.

### Industrial applicability

The invention is applicable, *interalia,* throughout the retail and service industries.

### Citation list

The following literature is cited throughout this document.

US 2002035506 A (LOYA RAMI) 21.03.2002

MEYER, John P., et al. Employee commitment and motivation: a conceptual analysis and integrative model. Journal of Applied Psychology. 2004, vol.89, no.6, p.991-1007.

JONES, Gareth R., et al. Contemporary Management. 3rd edition. Edited by WINSTON, Andy, et al. New York: McGraw-Hill, 2002. ISBN 0071151214. p.402-439.

## Claims

1. A computer-implemented method of motivating employees **characterized in**,
upon submission of a points claim form containing a user identifier and a number of points claimed, creating a record in a points claims table, the record comprising a unique points claim identifier, the submitted user identifier, and the submitted number of points claimed and,
upon submission of a confirmation form containing the points claim identifier, selecting from the points claims table the record comprising the points claim identifier and marking the record as confirmed.

2. A data-processing apparatus comprising means for carrying out the method of Claim 1.

3. A computer program comprising instructions which, when the program is executed by a computer, cause the computer to carry out the method of Claim 1.

4. A computer-readable medium comprising instructions which, when executed by a computer, cause the computer to carry out the method of Claim 1.
